# EUROPEAN PATENT APPLICATION

(11) **EP 1 953 251 A1**
(43) Date of publication of application: **06.08.2008**
(21) Application number: 08100604.1
(22) Date of filing: 17.01.2008
(51) Int. Cl.: C22C 14/00, C22F 1/18

(54) **Method and article relating to a high strength erosion resistant titanium Ti62222 alloy**

(30) Priority: 31.01.2007 US 669607
(71) Applicant: General Electric Company, Schenectady, NY 12345 (US)
(72) Inventor: THAMBOO, Samuel Vinod, Latham, NY 12110 (US); YANG, Ling, Clifton Park, NY 12065 (US)
(74) Representative: Szary, Anne Catherine

(57) **Abstract**

A method of treating an article including a titanium alloy having 5-6.5% aluminum by weight; 1.5-2.5% tin by weight; 1.5-2.5% chromium by weight; 1.5-2.5% molybdenum by weight; 1.5-2.5% zirconium by weight; and titanium includes heat treating the titanium alloy without exposing the titanium alloy to a beta anneal process. There is also included an article that has been subjected to a heat treatment process that does not include a beta anneal.

## Description

### BACKGROUND OF THE INVENTION

The present invention relates to methods and articles comprising titanium alloys. These articles may be suitable for use in turbines, particularly steam turbines, and particularly relates to titanium alloys (known as Ti-62222) suitable for use in turbine blades, preferably long blades. The titanium alloys may require an unconventional heat treatment.

It may be desirable to optimize the performance of last-stage buckets in steam turbines. The last stage of a steam turbine can be the highest loaded stage and may contribute on the order of about 10% to the overall output of the turbine. As will be appreciated, last-stage buckets are exposed to a wide range of flows, pressures, loads and strong dynamic forces. A bucket's material, as well as other factors, may affect its performance.

Long steam turbine buckets - which are usually at the end of the low pressure section of the turbine - are preferably lightweight. The weight of the bucket generally adds to the centrifugal force pulling on the rotor attachment areas. These pull loads can exceed the tensile strength of the rotor alloy and may cause damage to the rotor. Titanium alloys (such as Ti-6-4) have been used, because those alloys' density can be roughly one-third of steel alloys'.

When turbine blades become longer than 45 inches, the weight of the titanium blade can be high enough to exceed the yield strength of the titanium itself. This may cause deformation of the blade at the root. Therefore for these lengths the titanium alloy is preferably lightweight as well as high strength.

In addition, at the end of the low pressure section, the steam can have considerable moisture, which may condense on the stationary airfoils just before the last stage. These droplets then may be released with high velocity onto the rotating blade. The impact with the rotating blade may cause erosion of the leading edge of the blades. The bucket's material is preferably resistant to water droplets.

### BRIEF DESCRIPTION OF THE INVENTION

In an embodiment of the present invention, there is a method of treating an article comprising a titanium alloy. The titanium alloy includes 5-6.5% aluminum by weight; 1.5-2.5% tin by weight; 1.5-2.5% chromium by weight; 1.5-2.5% molybdenum by weight; 1.5-2.5% zirconium by weight; and titanium. The method includes the steps of: exposing the titanium alloy to a forging start temperature ranging from 1500°F to 1800°F; exposing the titanium alloy to an alpha-beta anneal process having a temperature ranging from 1550°F to 1850°F; and exposing the titanium alloy to an aging process having a temperature ranging from 800°F to 1000°F for a length of time ranging from 1 hour to 24 hours. The method does not include exposing the titanium alloy to a beta anneal process.

In another embodiment of the present invention, there is an article that includes 5.25-6.25% aluminum by weight; 1.75-2.25% tin by weight; 1.75-2.25% chromium by weight; 1.75-2.25% molybdenum by weight; 1.75-2.25% zirconium by weight; 0.1-0.2% silicon by weight; 0-0.15% iron by weight; 0-0.08% carbon by weight; 0-0.15% oxygen by weight; 0-0.05% nitrogen by weight; 0-0.015% hydrogen by weight; and titanium. The article, which may be a turbine blade, has been subjected to a heat treatment process that does not include beta anneal.

### BRIEF DESCRIPTION OF THE DRAWINGS

FIGURE 1 illustrates a steam turbine blade in accordance with an embodiment of the present invention.
FIGURE 2 is a cross-section through line II-II shown in FIGURE 1.
FIGURE 3 illustrates a steam turbine blade in accordance with an embodiment of the present invention.
FIGURE 4 illustrates a steam turbine blade in accordance with an embodiment of the present invention.
FIGURE 5 illustrates the grain structure for the titanium alloy treated using the Triplex and the Fine Grain process.
FIGURE 6 is a plot illustrating the relative erosion resistance of several alloys.

### DETAILED DESCRIPTION OF THE INVENTION

At the present time, steam turbine manufacturers typically use alloy Ti-6-4 for the longer last stage buckets. Other titanium alloys, including those listed in U.S. Patent No. 7195455, have also been explored. In general, Ti-6-4 can be relatively easily made into the airfoil shape by forging. Ti-6-4 generally has a yield strength of approximately 90,000 psi at room temperature. This can work out very well for blades which are shorter than 45 inches long.

Ti-6-4 may not have the strength to sustain its own centrifugal loading for steam turbines turning at 3000-3600rpm. This alloy may also have problems caused by only modest resistance to water droplet erosion. There have been attempts to improve the water droplet erosion of this material. These include hardening the tips (which are typically most susceptible) by using nitriding (e.g., U.S. Patent Nos. 4,942,059 and 5,366,345), adding erosion shields made of other alloys like stellite or titanium carbides (e.g., U.S. Patent Nos. 5,183,390, 4,842,663, 3,561,886, and 4,795,313).

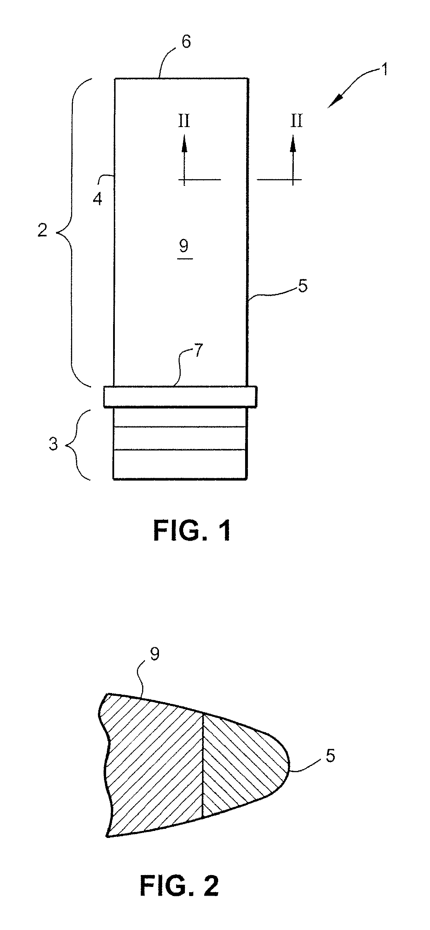

Figures 1 and 2 illustrate a blade 1 from one of the last few rows of blades in a low pressure steam turbine. As is conventional, the blade 1 is comprised of an airfoil portion 2 and a root portion 3. The root portion 3 serves to attach the blade 1 to the rotor of a steam turbine. The airfoil 2, which is exposed to the steam flowing through the turbine, serves to extract the energy from the steam necessary to rotate the rotor. As shown in Figure 1, the airfoil 2 is comprised of a leading edge portion 4, a trailing edge portion 5 and a center portion 9 disposed between the leading and trailing edge portions and adjacent to each. The airfoil 2 has a tip portion 6 and a platform 7, which serves as the attachment point of the airfoil to the root 3.

Water droplets may form in the steam flowing through the lowest pressure portions of low pressure steam turbines. These water droplets are entrained in the steam flow and, as a result of centrifugal force, may migrate outward toward the tips of the blades. The water droplets may cause harmful erosion of the trailing edge 5 of the blade airfoil 2 near its tip portion 6.

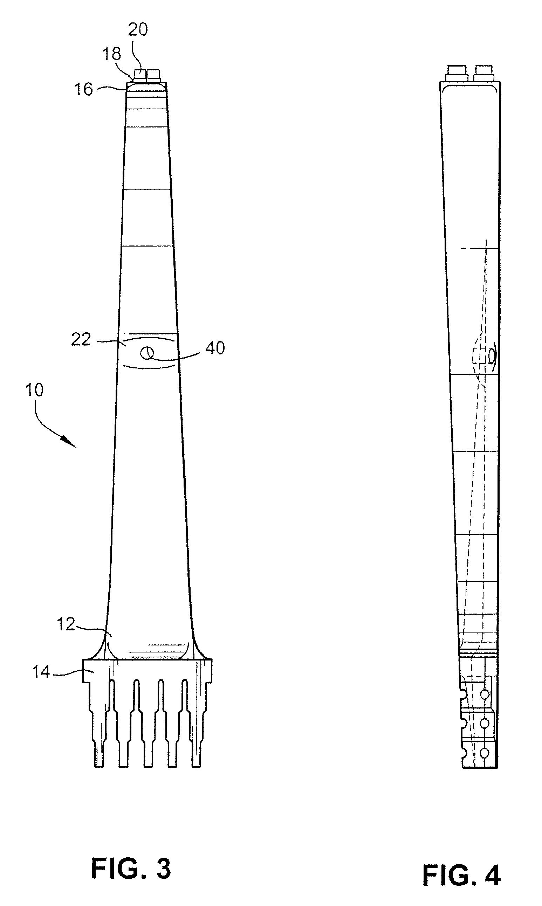

Referring to the drawings of Figures 3 and 4, the bucket of an embodiment of the present invention is generally designated 10 and has a root section 12 connected to a finger dovetail 14 for connection to the wheel of the turbine, not shown. Bucket 10 also includes a tip 16 having radially projecting stepped tenons 18 and 20 for receiving inner and outer covers. Adjacent the midpoint of the bucket, there is provided a built-up section 22 having an aperture 40 for receiving a tiewire adjacent the bucket's midpoints for structural damping. The dovetails 14 may have circumferentially projecting portions between their opposite axial ends and corresponding circumferentially opening recesses along their opposite sides. This may enable the finger dovetails to nest one within the other to accommodate an extreme curvature of the root sections 12 of the buckets adjacent the finger dovetails. In addition to the embodiments illustrated in Figures 1-4, other configurations of the bucket (including any of its sections) may be implemented in certain embodiments of the present invention.

Figures 3 and 4 illustrate a typical latter stage steam turbine blade which could be over 45 inches in length. In general, increasing blade length may improve efficiency. This design of blade is supported at the mid-span with nubs and at the tips covers. Both these features make contact with adjacent blades during operation and provide mutual support. The axial entry dovetails are the locations where the blade is attached to the rotor. This area typically sees the highest stresses and is in contact with the steel of the rotor. This area, therefore, may require a high strength material. Just above the dovetails at the start of the airfoil, the edge of the blade is generally subjected to alternating stresses and, therefore, may require good low cycle fatigue and high cycle fatigue resistance. In addition, the turbine blade generally may have good fracture toughness to prevent premature failure.

In accordance with an embodiment of the present invention, there is an alloy with 6% aluminum (Al) by weight, 2% chromium (Cr) by weight, 2% tin (Sn) by weight, 2% zirconium (Zr) by weight, 2% molybdenum (Mo) by weight, and the balance titanium (Ti). Silicon (Si) up to 0.25% by weight can also be present, and other elements, such as iron (Fe), carbon (C), oxygen (O), nitrogen (N), and/or hydrogen (H) may also be present.

In accordance with a preferred embodiment of the present invention, the titanium alloy preferably contains between 5 and 6.5% aluminum by weight, and all subranges therebetween, more preferably between 5.25 and 6.25% aluminum by weight, and all subranges therebetween, and most preferably 6.04% aluminum by weight. The titanium alloy preferably contains between 1.5 and 2.5% tin by weight, and all subranges therebetween, more preferably between 1.75 and 2.25% tin by weight, and all subranges therebetween, and most preferably 1.99% tin by weight. The titanium alloy preferably contains between 1.5 and 2.5% chromium by weight, and all subranges therebetween, more preferably between 1.75 and 2.25% chromium by weight, and all subranges therebetween, and most preferably 1.93% chromium by weight. The titanium alloy preferably contains between 1.5 and 2.5% molybdenum by weight, and all subranges therebetween, more preferably between 1.75 and 2.25% molybdenum by weight, and all subranges therebetween, and most preferably 1.99% molybdenum by weight. The titanium alloy preferably contains between 1.5 and 2.5% zirconium by weight, and all subranges therebetween, more preferably between 1.75 and 2.25% zirconium by weight, and all subranges therebetween, and most preferably 2.00% zirconium by weight. Optionally, the titanium alloy may also preferably contain between 0.05 and 0.25% silicon by weight, and all subranges therebetween, more preferably between 0.1 and 0.2% silicon by weight, and all subranges therebetween, and most preferably 0.15% silicon by weight. Optionally, the titanium alloy may contain additional elements. For example, the alloy may contain up to 0.25%, more preferably up to 0.15% (and all subranges therebetween), iron by weight; up to 0.15%, more preferably up to 0.08% (and all subranges therebetween), carbon by weight; up to 0.25%, more preferably up to 0.15% (and all subranges therebetween), oxygen by weight; up to 0.1%, more preferably up to 0.05% (and all subranges therebetween), nitrogen by weight; and/or up to 0.025%, more preferably up to 0.015% (and all subranges therebetween), hydrogen by weight. Most preferably, the titanium alloy contains 0.09% iron by weight, 0.01% carbon by weight, 0.11% oxygen by weight, 0.004% nitrogen by weight, 0.0005% hydrogen by weight. The balance of the titanium alloy comprises titanium.

One application for this type of titanium alloy (sometimes called Ti-62222 or Ti-6Al-2Cr-2Mo-2Zr-2Sn) was developed in the 1970s and may have been considered for some time as the airframe structural alloy for the F-22 fighter aircraft. A heat treatment process for this alloy may be known as the "Triplex" heat treatment process. The steps (along with the steps for the "Fine Grain" heat treatment process in accordance with an embodiment of the present invention) are shown in Table 1.

**Table 1: Process Steps for the Triplex Process and the Fine Grain Process**

| Process Steps | Triplex Process | Fine Grain Process |
|---|---|---|
| Forging start temperature | 1650°F | 1650°F |
| Beta anneal | 1830°F | |
| Alpha-beta-anneal | 1700°F, water quench | 1700°F, water quench |
| Aging 8hrs | 1000°F, air cool | 1000°F, air cool |

For Ti-62222, the Triplex heat treatment process may provide good strength and good fracture toughness for airframe structures. But because a steam turbine blade is different, a modified process may be necessary.

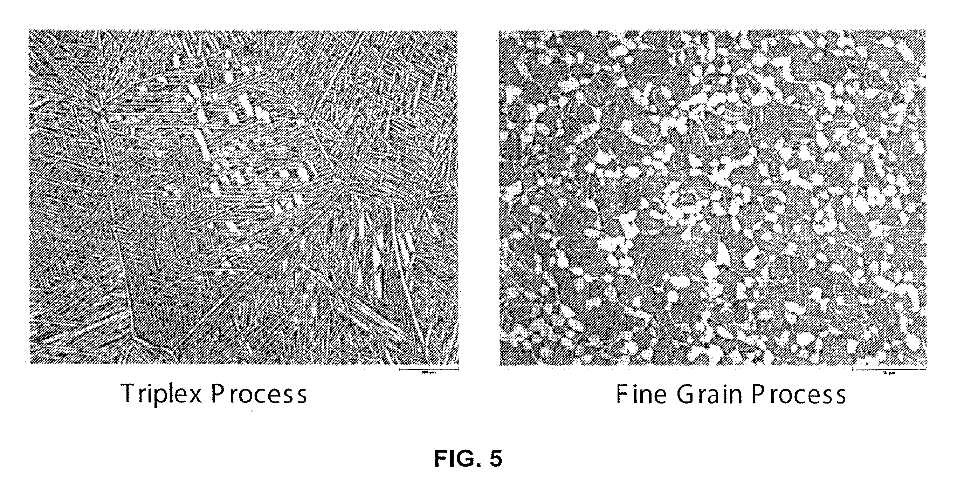

In an embodiment, this invention uses a heat treatment practice for the Ti-62222 alloy to produce a fine grain size, which may produce the right balance of properties for this application. This is the Fine Grain Heat Treat process and a preferred embodiment of the process details are listed in Table 1. A difference is that a beta anneal step is not required. The absence of the beta anneal step may produce a significant difference in microstructure as shown in Figure 5 and improvement in properties as shown in Table 2 set forth below.

In accordance with an embodiment of the present invention, a titanium alloy is exposed to a forging start temperature preferably ranging from 1500°F to 1800°F, and all subranges therebetween, more preferably from 1600°F to 1700°F, and all subranges therebetween, and most preferably at 1650°F. Without exposure to a beta anneal process step, the titanium alloy is exposed to an alpha-beta anneal process step having a temperature ranging from 1550°F to 1850°F, and all subranges therebetween, more preferably from 1650°F to 1750°F, and all subranges therebetween, and most preferably at 1700°F. The alpha-beta anneal process step preferably includes a water quench. After the alpha-beta anneal process step, the titanium alloy is exposed to aging at a temperature ranging from 800°F to 1200°F, and all subranges therebetween, more preferably from 900°F to 1100°F, and all subranges therebetween, and most preferably at 1000°F. The aging preferably occurs for a length of time ranging from 1 hour to 24 hours, and all subranges therebetween, more preferably from 6 hours to 10 hours, and all subranges therebetween, and most preferably for 8 hours.

Test buckets were processed into blade shapes as shown in Figure 1. The starting material had a composition as follows: 6.04%wt. Al; 1.99%wt. Sn; 1.93%wt. Cr; 1.99%wt. Mo; 2.00%wt. Zr; 0.15%wt. Si; 0.09%wt. Fe; 0.01%wt. C; 0.11%wt. O; 0.004%wt. N; 0.005%wt. H; balance Ti. The forging was done in closed dies. The temperatures for the forging and heat treatment process are listed as the "Triplex" process in Table 1. As the requirements for the steam turbine blade include good fatigue resistance a different heat treatment was also tried. This is called the "Fine Grain" process in Table 1. In some applications, fine grains may enhance fatigue resistance.

Table 2 lists mechanical properties obtained for both the Triplex heat treatment and the Fine Grain process. A latter stage steam turbine bucket can operate as high as 400°F under some specific conditions. Accordingly, tensile properties were measured also at 400°F. Fracture toughness and fatigue properties may stay the same or get better with temperature, and thus these properties were measured only at room temperatures.

**Table 2: Comparison of properties for a titanium alloy in accordance with a preferred embodiment of the present invention that has been treated using the Triplex Process and the Fine Grain Process**

| Property | Triplex Process | Fine Grain Process |
|---|---|---|
| Tensile strength | 158 | 155 |
| @RT ksi | | |
| 0.2% Yield strength | 140 | 140 |
| @RT ksi | | |
| Percent elongation | 9 | 15 |
| @RT | | |
| Percent reduction-in-area | 15 | 42 |
| @RT | | |
| Fracture toughness K1c | 94 | 67 |
| @RT (ksi sqrt in) | | |
| Hardness | 35 | 35 |
| Rockwell C scale | | |
| Tensile strength | 131 | 132 |
| @400°F ksi | | |
| 0.2%Yield strength | 104 | 104 |
| @400°F ksi | | |
| Percent elongation | 17 | 11 |
| @400°F | | |
| Percent reduction-in-area | 22 | 48 |
| @400°F | | |
| High Cycle Fatigue | 190K | 1.7M |
| @RT cycles | | |
| Low Cycle Fatigue | 12K | 69K |
| @1% strain range RT cycles | | |

| | | |
|---|---|---|
| RT - Room temperature, typically 75°F K - thousands of cycles ksi - 1000 pounds per square inch M - Millions of cycles ksi sqrt in - ksi√in | | |

As can be seen from Table 2, the tensile strength and yield strength are almost identical for both processes at both temperatures. The percent elongation and percent reduction-in-area are significantly better for the Fine Grain process. The fracture toughness at room temperature is somewhat higher for the Triplex process but the Fine Grain process also has very good fracture toughness and is equivalent or better than the conventionally used alloy Ti-6-4. High cycle fatigue (HCF) which is caused by high frequency vibrations typically multiples of the number of revolutions per minute (e.g., 3600 in the US, 3000 in most foreign countries). HCF testing was done with a mean stress of 50ksi and an alternating stress of 55ksi. These may represent worst case conditions for a steam turbine bucket. A test frequency of 45Hz was used not because that the bucket will typically experience such frequencies in commercial operation but because that is the highest frequency that can be tested on a fatigue test machine. It is believed that the test frequency does not affect the results significantly. Rather, it is believed that the number of cycles is a relatively more important testing criteria.

The Fine Grain process shows almost a ten-fold improvement in the number of cycles to failure. Low cycle fatigue (LCF) occurs only during start up and shut down. This happens because the blade goes through a transient in load during these times. In many commercial applications, steam turbines may not experience many starts and shutdowns. The test was conducted conservatively at a high strain range of 1%, which is believed to be well above anything that would typically happen in a typical steam turbine. It can be seen that the Fine Grain process is greater than five-fold over the Triplex process.

Figure 5 shows the grain structure for the titanium alloy treated using the Triplex and the Fine Grain process. It can be seen that the grain diameter of the Triplex process is 10 times more than the Fine Grain process.

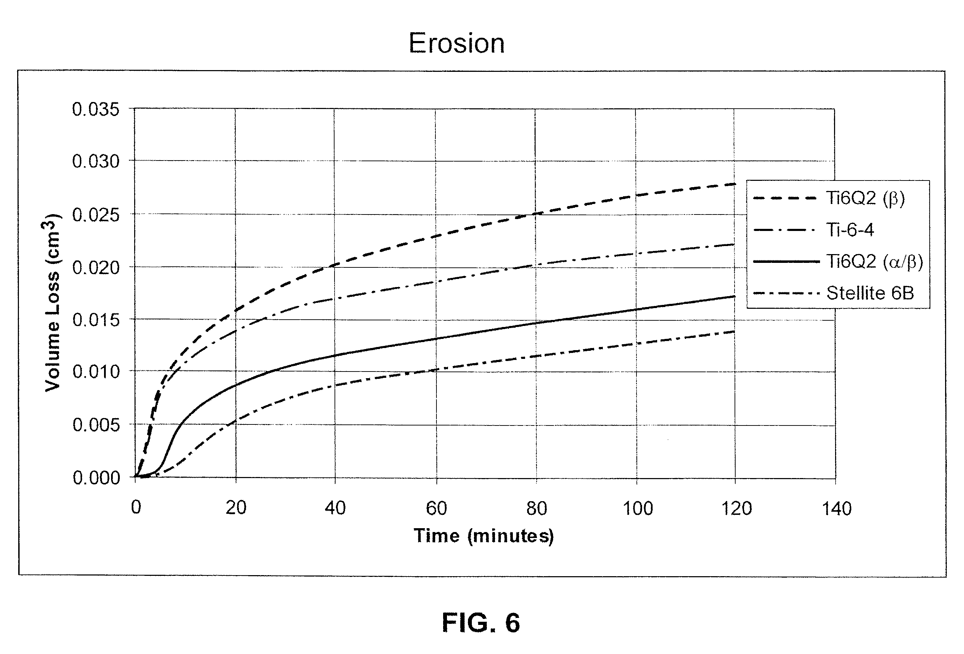

Figure 6 is a plot of the relative erosion resistance of several alloys. Stellite 6B is a cobalt-based alloy which is used in the prior art as an erosion shield which is physically attached to the leading edge of the blade. Ti-6-4 is the current titanium alloy used for steam turbine blades below 45 inches in length. Ti6Q2(β) is an alloy in accordance with an embodiment of the present invention and used in the beta-processed or Triplex heat treat listed in Table 1. Ti6Q2(α/β) is the alpha-beta or fine grain processed version of this alloy. The erosion test is done in a laboratory test under accelerated conditions of water droplet erosion.

Figure 6 provides a relative comparison of the erosion resistance (or volume loss of metal). The test has been calibrated to the erosion rate for real buckets and is believed to be valid for the relative ranking. It can be seen that the Triplex processed alloy has very high volume loss of material compared to stellite. It is even higher than the conventionally used Ti-6-4 alloy. But the fine grain processed alloy is coming close to stellite 6B in volume loss. This indicates that with proper design controls it may be possible to make a long titanium alloy bucket with this material in the fine grain process which will not need any separately joined stellite or other shield. This may represent a substantial savings in cost as well as a reduction in the risk of separation.

It can be seen that this fine grain process for an alloy in accordance with the present invention may achieve the goals and requirements for long (i.e., greater than 45 inches) steam turbine blades.

Although described in connection with long steam turbine blades, it may be used for other turbine blades (e.g., turbine blades in aircraft engines) where low weight, high strength, and/or high fatigue resistance may be beneficial.

All described and claimed numerical quantities and ranges are approximate and, thus, include some degree of deviation.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of treating an article comprising a titanium alloy, said method comprising the steps of:
exposing the titanium alloy to a forging start temperature ranging from 1500°F to 1800°F;
exposing the titanium alloy to an alpha-beta anneal process having a temperature ranging from 1550°F to 1850°F;
exposing the titanium alloy to an aging process having a temperature ranging from 800°F to 1000°F for a length of time ranging from 1 hour to 24 hours;
wherein the method does not include a method step comprising exposing the titanium alloy to a beta anneal process; and
wherein the titanium alloy comprises:
5-6.5% aluminum by weight;
1.5-2.5% tin by weight;
1.5-2.5% chromium by weight;
1.5-2.5% molybdenum by weight;
1.5-2.5% zirconium by weight; and
titanium.

2. The method according to claim 1, wherein the titanium alloy comprises
5.25-6.25% aluminum by weight;
1.75-2.25% tin by weight;
1.75-2.25% chromium by weight;
1.75-2.25% molybdenum by weight;
1.75-2.25% zirconium by weight; and
titanium.

3. The method according to claim 1 or claim 2, wherein the titanium alloy further comprises:
0.05-0.25% silicon by weight;
0-0.25% iron by weight;
0-0.15% carbon by weight;
0-0.25% oxygen by weight;
0-0.1 % nitrogen by weight; and
0-0.025% hydrogen by weight.

4. The method according to any preceding claim, wherein the titanium alloy further comprises:
0.1-0.2% silicon by weight;
0-0.15% iron by weight;
0-0.08% carbon by weight;
0-0.15% oxygen by weight;
0-0.05% nitrogen by weight; and
0-0.015% hydrogen by weight.

5. The method according to any preceding claim comprising the steps of:
exposing the titanium alloy to a forging start temperature ranging from 1600°F to 1700°F;
exposing the titanium alloy to an alpha-beta anneal process having a temperature ranging from 1650°F to 1750°F; and
exposing the titanium alloy to an aging process having a temperature ranging from 900°F to 1100°F for a length of time ranging from 6 hours to 10 hours.

6. The method according to any preceding claim comprising the steps of:
exposing the titanium alloy to a forging start temperature at 1650°F;
exposing the titanium alloy to an alpha-beta anneal process having a temperature at 1700°F; and
exposing the titanium alloy to an aging process having a temperature at 1000°F for a length of time of 8 hours.

7. The method according to any preceding claim further comprising the step of forming the titanium alloy into a shape of a turbine blade (1) having a length longer than 45 inches.

8. The method according to claim 7 further comprising the step of forming the turbine blade (1) into a steam turbine blade.

9. The method according to claim 7 further comprising the step of forming the turbine blade such that the turbine blade has a percent elongation of greater than 9% at room temperature.

10. An article comprising:
5.25-6.25% aluminum by weight;
1.75-2.25% tin by weight;
1.75-2.25% chromium by weight;
1.75-2.25% molybdenum by weight;
1.75-2.25% zirconium by weight;
0.1-0.2% silicon by weight;
0-0.15% iron by weight;
0-0.08% carbon by weight;
0-0.15% oxygen by weight;
0-0.05% nitrogen by weight;
0-0.015% hydrogen by weight; and
titanium;
wherein the article has been subjected to a heat treatment process that does not include a beta anneal.
